**Europäisches Patentamt**

**European Patent Office**

**Office européen des brevets**

(19)

(11) Veröffentlichungsnummer : **0 096 846**
**B1**

(12) **EUROPÄISCHE PATENTSCHRIFT**

(45) Veröffentlichungstag der Patentschrift :
11.01.89

(51) Int. Cl.⁴ : **B 60 J   7/02**

(21) Anmeldenummer : **83105646.0**

(22) Anmeldetag : **09.06.83**

(54) **Aufbau für Kraftfahrzeuge, insbesondere Personenkraftwagen, und Verfahren zur Herstellung eines solchen Aufbaus.**

(30) Priorität : **15.06.82 DE 3222419**

(43) Veröffentlichungstag der Anmeldung :
**28.12.83 Patentblatt 83/52**

(45) Bekanntmachung des Hinweises auf die Patenterteilung : **11.01.89 Patentblatt 89/02**

(84) Benannte Vertragsstaaten :
**DE FR GB IT NL**

(56) Entgegenhaltungen :
**DE--A-- 2 809 379**
**DE--A-- 3 125 996**

(73) Patentinhaber : **Adam Opel Aktiengesellschaft**
**Bahnhofsplatz 1 Postfach 1560**
**D-6090 Rüsselsheim (DE)**

(72) Erfinder : **Stahlhut, Richard, Ing. (grad.)**
**Hauffstrasse 33**
**D-6050 Offenbach (DE)**

(74) Vertreter : **Elbert, Karl, Dipl.-Ing. et al**
**Adam Opel Aktiengesellschaft Bahnhofplatz 1 Postfach 17 10**
**D-6090 Rüsselsheim (DE)**

**Beschreibung**

Die Erfindung bezieht sich auf einen Aufbau für Kraftfahrzeuge, insbesondere Personenkraftwagen, mit einem Schiebedach, welches von einem durch Verstärkungsschienen verstärkten Schiebedachrahmen getragen wird, wobei der Schiebedachrahmen, zusammen mit den Verstärkungsschienen, am Fahrzeugdach angepunkt ist, so daß er mit dem Fahrzeugdach eine Baueinheit bildet, welche an ihren seitlichen Rändern mit der jeweils zugeordneten Fahrzeugseitenwand verschweißt ist.

Bei bekannten Kraftfahrzeugaufbauten der vorbezeichneten Art wird die aus Dach und angepunktetem Schiebedachrahmen, einschließlich Verstärkungsschienen, bestehende vorgefertigte Baueinheit von oben in die dafür vorgesehene Karosserieöffnung eingefahren. Anschließend sollen die am weitesten nach außen stehenden Flächen (sogenannte « Ohren ») der Dach-Baueinheit, die durch die Enden der Verstärkungsschienen gebildet werden, mit der jeweils zugeordneten Fahrzeugseitenwand lichtbogenverschweißt werden. Schwierigkeiten bereiten hierbei die relativ großen Toleranzen (± 6 mm) der Abstände zwischen den beiden Fahrzeugseitenwänden rechts und links. Um die abschließende Schweißverbindung zwischen Dach-Baueinheit und Fahrzeugseitenwänden vornehmen zu können, ist in den meisten Fällen an den « Ohren » der Dach-Baueinheit eine aufwendige Nacharbeit erforderlich, die darin besteht, die « Ohren » durch Drücken oder Schlagen von innen an die jeweils zugeordnete innere Fahrzeugseitenwand anzupassen. Diese für den Ausgleich der Abstandstoleranzen der Fahrzeugseitenwände erforderlichen Nacharbeiten, die übrigens eine gewisse Geschicklichkeit des Monteurs voraussetzen, sind nicht nur als solche zeitraubend und kostspielig, sondern sie können in manchen Fällen auch die Dachwölbung beeinträchtigen, weil die Verstärkungsschienen ja mit dem Dach durch Punktschweißung fest verbunden sind.

Durch die DE-A-28 09 379 ist ein anderer Kraftfahrzeugaufbau bekanntgeworden, bei dem das Schiebedach einen Rahmenboden aufweist. Unterhalb der Dachhaut ist eine durch Quer- und Längsträger gebildete Rahmenstruktur angeordnet. Der durch Eindrückungen verstärkte Rahmenboden bildet mit einem Teil der Quer- und Längsträger einen steifen Trägerverbund. Die Quer- und Längsträger, welche die Rahmenstruktur bilden, sind in das Rohbaugerippe des Aufbaus integriert.

Bei diesem Stand der Technik bilden — abweichend von dem eingangs bezeichneten Aufbau — die Teile Dachhaut und Schiebedachrahmen keine vormontierte Baueinheit. Vielmehr ist zunächst die aus Längs- und Querträgern gebildete Rahmenstruktur in den Aufbau zu « integrieren » (d. h. vermutlich mit den Fahrzeugseitenwänden zu verschweißen). Anschließend wird der Rahmenboden des Schiebedaches mit nach innen gerichteten Flanschen der Rahmenstruktur verpunktet. Schließlich erfolgt eine Punktverschweißung der äußeren Dachhaut-Ränder mit nach außen gerichteten Flanschen der Rahmenstruktur. Zugleich soll eine mit der Dachhaut (bzw. mit dem Rahmenboden) verbundene Rinne mit dem Rahmenboden (bzw. mit der Dachhaut) punktverschweißt werden.

Die im vorstehenden beschriebene bekannte Konstruktion erweist sich, insbesondere hinsichtlich ihrer Montage, sehr aufwendig. Beim Zusammenbau der einzelnen Teile sind Mehrfachpassungen zu beachten, die einen Toleranzausgleich der Seitenwandabstände nahezu unmöglich machen. Die aufgrund dessen erforderliche Beachtung sehr kleiner Abstandsdifferenzen der Seitenwände schon bei der Erstellung des Rohbaugerippes des Aufbaus bedingen einen erhöhten Fertigungsaufwand, verbunden mit entsprechend hohen Kosten.

Aufgabe der vorliegenden Erfindung ist es, einen Kraftfahrzeugaufbau mit Schiebedach der eingangs bezeichneten Art so auszugestalten, daß er vergleichsweise einfach und schnell montierbar ist, wobei auch größere Abstandsdifferenzen zwischen den Fahrzeugseitenwänden in einfacher Weise ausgleichbar sein sollen.

Gemäß der Erfindung wird die Aufgabe dadurch gelöst, daß der Schiebedachrahmen mittels eines Rahmen-Oberteils beidseitig jeweils mit einem seitlichen Dachflansch punktverschweißt ist und daß die oberen Längsträger der Fahrzeugseitenwände jeweils einen nach innen gerichteten, horizontal oder im wesentlichen horizontal angeordneten Flansch bilden und daß die seitlichen Dachflansche zusammen mit dem angepunkteten Rahmen-Oberteil durch Punktschweißung mit den zugeordneten Flanschen der Fahrzeugseitenwände verbunden sind.

Die Erfindung vermeidet vorteilhaft Mehrfachpassungen, weil die aus Fahrzeugdach und Schiebedachrahmen, einschließlich Verstärkungsschienen, bestehende Baueinheit in vormontiertem Zustand an den übrigen Kraftfahrzeugaufbau angefügt wird. Besonders vorteilhaft wirkt sich hierbei, insbesondere im Vergleich mit der bekannten Konstruktion nach DE-A-28 09 379 die erfindungsgemäße Maßnahme aus, für die Punktschweißverbindung sowohl der Dachflansche wie auch des Rahmen-Oberteils, einschließlich Verstärkungsschienen, mit den Fahrzeugseitenwänden nur jeweils einen einzigen (nach innen gerichteten) horizontal angeordneten Flansch der jeweils zugeordneten Fahrzeugseitenwand vorzusehen. Hierdurch wird ein einfacher Ausgleich auch relativ großer Abstandsdifferenzen zwischen den Fahrzeugseitenwänden ermöglicht, und zwar durch horizontale Verschiebung der Dach-Baueinheit vor dem Punktschweißen mit den Fahrzeugseitenwänden.

Die Erfindung vermeidet vorteilhaft hierdurch ferner aufwendige Nacharbeiten an den äußeren Dachflanschen und beseitigt dadurch die Gefahr, daß es zu Beeinträchtigungen der Dachwölbung kommt. Schließlich wird durch die Erfindung das bisher zur Verbindung der Dach-Baueinheit mit den Fahrzeugseitenwänden angewandte, weil erforderliche, aufwendige Lichtbogen-Schweißverfahren entbehrlich ; es genügt einfache Punktverschweißung.

Die Erfindung befaßt sich darüber hinaus mit einem Verfahren zur Herstellung des erfindungsgemäßen Aufbaus, wobei das separate Dach mit Schiebedachrahmen und Verstärkungsschienen durch Punktschweißen zu einer Baueinheit verbunden wird, die anschließend von oben in die entsprechende Karosserieöffnung eingefahren und mit den Fahrzeugseitenwänden verschweißt wird. Ein diesbezügliches weiteres Merkmal der Erfindung besteht darin, daß die Baueinheit auf horizontal oder im wesentlichen horizontal angeordnete Flansche der Fahrzeugseitenwände aufgesetzt und an seitlichen Dachflanschen mit den Flanschen der Fahrzeugseitenwände punktverschweißt wird.

Hinsichtlich der Vorteile des erfindungsgemäßen Verfahrens gegenüber dem bekannten Stand der Technik wird auf die obigen Ausführungen verwiesen.

Weitere vorteilhafte Ausgestaltungen der Erfindung können den Unteransprüchen sowie — anhand von Ausführungsbeispielen — den Zeichnungen und der nachstehenden Beschreibung entnommen werden.

Es zeigt :

Fig. 1 eine Draufsicht (schematisch) auf einen ein Schiebedach enthaltenden Teil eines Kraftfahrzeugdaches,

Fig. 2 einen Schnitt längs der Linie II-II in Fig. 1 (ebenfalls schematisch),

Fig. 3 einen Schnitt längs der Linie III-III in Fig. 1 (in gegenüber Fig. 1 vergrößerter Darstellung),

Fig. 4 einen Schnitt längs der Linie IV-IV in Fig. 1 (im Maßstab entsprechend Fig. 3),

Fig. 5 einen Schnitt längs der Linie V-V in Fig. 1 (im Maßstab entsprechend Fig. 3 und 4),

Fig. 6 eine andere Ausführungsform, anhand einer Schnittdarstellung entsprechend Fig. 5 und

Fig. 7 einen Schnitt längs der Linie VII-VII in Fig. 6.

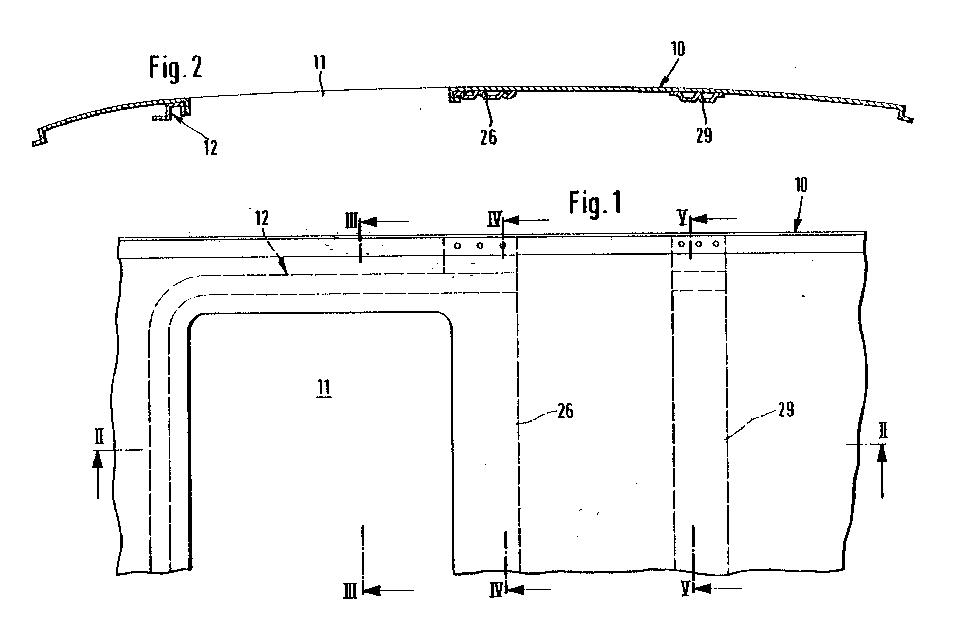

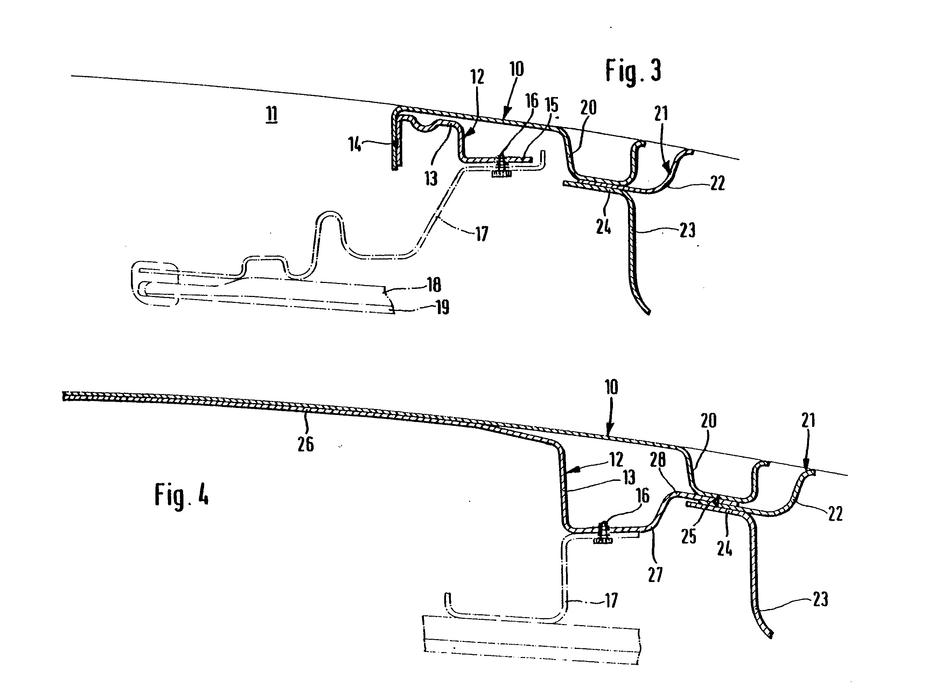

Nach Fig. 1 und 2 bezeichnet 10 das Dach eines Kraftfahrzeuges, z. B. eines Personenkraftwagens. Das Dach 10 weist eine etwa rechteckige Öffnung 11 auf, die für ein Schiebedach (nicht gezeigt) vorgesehen ist. Zur Halterung und Führung des Schiebedaches dient ein Schiebedachrahmen 12, der in seinen Einzelheiten aus Fig. 3-7 hervorgeht.

Wie insbesondere Fig. 3 erkennen läßt, weist der insgesamt mit 12 bezeichnete Schiebedachrahmen ein Rahmen-Oberteil 13 auf, welches bei 14 mit dem am Rand der Öffnung 11 nach innen abgebogenen Dach 10 punktverschweißt ist. Das Rahmen-Oberteil 13 besitzt einen etwa horizontal nach außen abgebogenen Rand 15, an dem — vorzugsweise mittels Blechschrauben 16 — ein Rahmen-Unterteil 17 befestigt ist. Das Rahmen-Unterteil 17 dient zur unmittelbaren Halterung und Führung des nicht gezeigten Schiebedachs.

An der Unterseite des Rahmen-Unterteils 17 ist ein Formhimmelträger 18 befestigt, der einen Formhimmel 19 trägt.

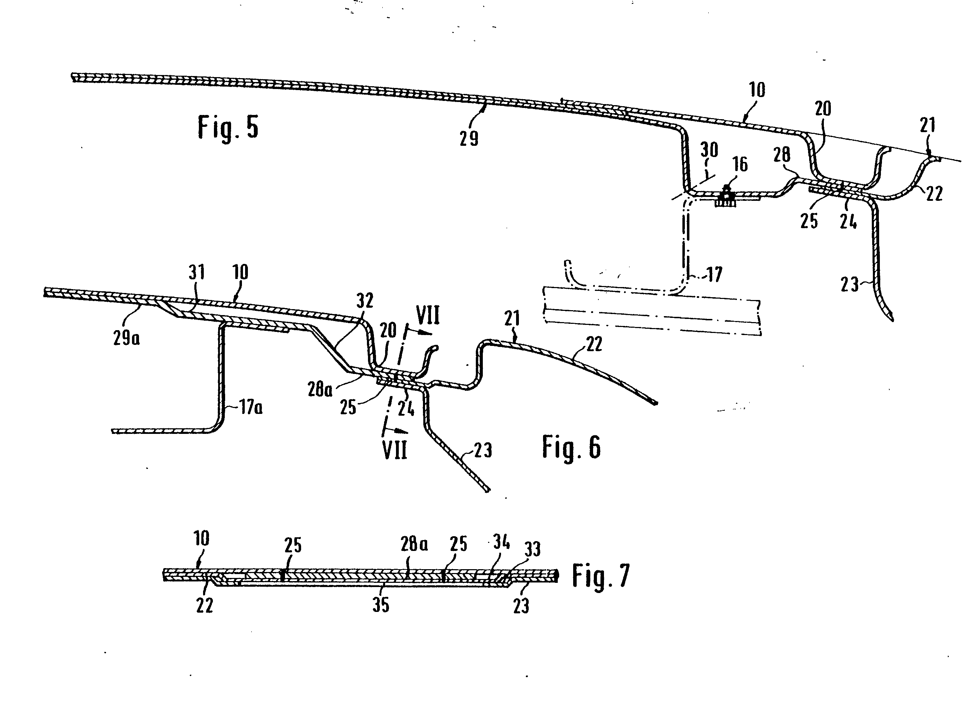

Aus Fig. 3-6 ist des weiteren zu erkennen, daß das Fahrzeugdach 10 seitliche Dachflansche 20 aufweist, die rinnenförmig nach unten abgekröpft sind und zugleich als Regenrinne für das Fahrzeugdach 10 dienen können. Die seitlichen Dachflansche 20 dienen ferner dazu, das Fahrzeugdach 10 mit oberen Längsträgern 21 der Fahrzeugseitenwände zu verbinden. Wie insbesondere Fig. 6 zeigt, werden die oberen Längsträger 21 in üblicher Weise durch eine äußere Seitenwand 22 und eine innere Seitenwand 23 gebildet. Die oberen Längsträger 21 bilden hierbei jeweils einen nach innen gerichteten, etwa horizontal angeordneten Flansch 24, der bei 25 mit den zugeordneten seitlichen Dachflanschen 20 punktverschweißt ist.

Fig. 1, 2 und 4 machen deutlich, daß der Schiebedachrahmen 12, respektive dessen Rahmen-Oberteil 13, am hinteren Ende der Schiebedach-Ausnehmung 11 durch eine Verstärkungsschiene 26 verstärkt ist. Das im folgenden als « vordere Verstärkungsschiene » bezeichnete Teil 26 ist mit dem Rahmen-Oberteil 13 einstückig verbunden und bildet einen rinnenförmig nach unten abgekröpften Flansch 27, an dem das bereits erwähnte Rahmen-Unterteil 17 durch Schrauben 16 befestigt ist. Die vordere Verstärkungsschiene 26 kann des weiteren mit dem Fahrzeugdach 10 in dessen Mittelbereich durch Punktschweißung verbunden sein.

Fig. 4 läßt weiterhin erkennen, daß die mit dem Rahmen-Oberteil 13 einstückig verbundene vordere Verstärkungsschiene 26 beidseitig je einen etwa horizontal nach außen abgebogenen Rand 28 besitzt, der — ebenfalls bei 25 — mit dem zugeordneten seitlichen Dachflansch 20 und dem nach innen gerichteten Flansch 24 des zugeordneten oberen Längsträgers 21 punktverschweißt ist. Durch die Punktverschweißung 25 sind somit Fahrzeugdach 10, Schiebedachrahmen 12 und Fahrzeugseitenwände 21 an ein- und derselben Verbindungsstelle miteinander verbunden. Wie Fig. 1, 2 und 5 verdeutlichen, besitzt der Schiebedachrahmen 12 des weiteren noch eine hintere Verstärkungsschiene, die mit 29 bezeichnet ist. Fig. 5 zeigt, daß die hintere Verstärkungsschiene 29 in gleicher Weise wie die vordere Verstärkungsschiene 26 einerseits mit dem Rahmen-Unterteil 17, andererseits mit dem seitlichen Dachflansch 20 und dem horizontal angeordneten Flansch 24 des vorderen Längsträgers 21 der zugeordneten Fahrzeugseitenwand verbunden ist.

Anstelle einer durchgehenden, d. h. das Fahrzeugdach 10 in seiner gesamten Breite unterstützenden Verstärkungsschiene 29 können alternativ auch zwei seitliche Auflagestützen vorgesehen sein, die etwa bei der gestrichelten Linie 30 (Fig. 5) enden können. Die Ausbildung derartiger Auflagestützen kann im einzelnen der aus Fig. 5 ersichtlichen Ausgestaltung der hinteren Verstärkungsschiene 29 im Bereich rechts von der Linie 30 entsprechen.

Fig. 6 und 7 zeigen eine gegenüber der Ausführungsform nach Fig. 3-5 etwas abgewandelte Variante. Die hier mit 29a bezifferte hintere Verstärkungsschiene weist im Dachbereich eine nach unten gerichtete Abkröpfung 31 auf, an der das Rahmen-Unterteil 17a durch Punktschweißung befestigt ist. Durch eine weitere Abkröpfung 32 wird dann der seitliche Rand 28a der hinteren Verstärkungsschiene 29a gebildet, der — ebenso wie bei der Ausführungsform nach Fig. 3-5 — mit dem seitlichen Dachflansch 20 und dem nach innen gerichteten, etwa horizontal angeordneten Flansch 24 des oberen Längsträgers 21 der Fahrzeugseitenwand punktverschweißt ist.

Eine Besonderheit besteht bei dieser Ausführungsform des weiteren darin, daß das innere Seitenwandblech 23 und das äußere Seitenwandblech 22 des oberen Längsträgers 21 — wie Fig. 7 verdeutlicht — an der Stelle 25 der Punktschweißverbindung Verprägungen 33, 34 aufweisen, um für die vorzunehmende Punktverschweißung in geeigneter Weise eine Zentrierung der zu verbindenden Teile 10, 28a, 22 und 23 zu ermöglichen.

Fig. 7 läßt eine weitere Besonderheit der Ausführungsform nach Fig. 6 und 7 erkennen. Danach ist das ein Teil des nach innen gerichteten etwa horizontal angeordneten Flansches 24 bildende innere Seitenwandblech 23 im Bereich der Punktschweißstellen 25 ausgespart ausgebildet (Aussparung 35). Durch diese Maßnahme wird eine durch vier Blechstärken hindurchgehende Punktverschweißung vermieden. Die Punktverschweißung 25 umfaßt, wie Fig. 7 zeigt, lediglich drei Blechstärken, nähmlich die Teile 10, 28a und 22. Eine Verbindung der Bleche 22, 23 im Bereich des Flansches 24 durch Punktverschweißung erfolgt ohnehin separat an anderen Stellen.

**Patentansprüche**

1. Aufbau für Kraftfahrzeuge, insbesondere Personenkraftwagen, mit einem Schiebedach, welches von einem durch Verstärkungsschienen (26, 29) verstärkten Schiebedachrahmen (12) getragen wird, wobei der Schiebedachrahmen (12), zusammen mit den Verstärkungsschienen (26, 29), am Fahrzeugdach angepunktet ist, so daß er (12) mit dem Fahrzeugdach eine Baueinheit bildet, welche an ihren seitlichen Rändern mit der jeweils zugeordneten Fahrzeugseitenwand verschweißt ist, dadurch gekennzeichnet, daß der Schiebedachrahmen (12) mittels eines Rahmen-Oberteils (13) beidseitig jeweils mit einem seitlichen Dachflansch (20) punktverschweißt ist und daß die oberen Längsträger (21) der Fahrzeugseitenwände jeweils einen nach innen gerichteten, horizontal oder im wesentlichen horizontal angeordneten Flansch (24) bilden und daß die seitlichen Dachflansche (20) zusammen mit dem angepunkteten Rahmen-Oberteil (13) durch Punktschweißung mit den zugeordneten Flanschen (24) der Fahrzeugseitenwände verbunden sind.

2. Aufbau nach Anspruch 1 mit einer vorderen Verstärkungsschiene (26) für den Schiebedachrahmen (12), dadurch gekennzeichnet, daß die vordere Verstärkungsschiene (26) mit dem Rahmen-Oberteil (13) einstückig verbunden ist und einen rinnenförmig nach unten abgekröpften Flansch (27) bildet, an dem ein Rahmen-Unterteil (17), vorzugsweise durch Schrauben (16), befestigt ist (Fig. 4).

3. Aufbau nach Anspruch 1 oder 2, dadurch gekennzeichnet, daß eine hintere Verstärkungsschiene (29) vorgesehen ist, an der ebenfalls das Rahmen-Unterteil (17), vorzugsweise mittels Schrauben (16), angreift und daß die hintere Verstärkungsschiene (29) entsprechend dem Rahmen-Oberteil (13) durch Punktschweißung mit den seitlichen Dachflanschen (20) des Fahrzeugdaches (10) verbunden ist (Fig. 5).

4. Aufbau nach Anspruch 1 oder 2, dadurch gekennzeichnet, daß am hinteren Ende des Schiebedachrahmens (12) als Rahmen-Oberteil beidseitig je eine Auflagestütze vorgesehen ist, an denen das Rahmen-Unterteil (17), vorzugsweise mittels Schrauben (16), angreift, und daß die Auflagestützen durch Punktschweißung mit den seitlichen Dachflanschen (20) des Fahrzeugdaches (10) verbunden sind (Fig. 5).

5. Aufbau nach einem der vorstehenden Ansprüche, dadurch gekennzeichnet, daß die zur Punktschweißverbindung mit dem Rahmen-Oberteil (13) bzw. mit der hinteren Verstärkungsschiene (29) bzw. mit den Auflagestützen dienenden seitlichen Dachflansche (20) zugleich die mit den horizontalen oder im wesentlichen horizontalen Flanschen (24) der Fahrzeugseitenwände (21, 22, 23) zusammenwirkenden Verbindungsflächen bilden.

6. Aufbau nach einem der vorstehenden Ansprüche, dadurch gekennzeichnet, daß die seitlichen Dachflansche (20) rinnenförmig nach unten abgekröpft ausgebildet sind und zugleich als Regenrinne für das Fahrzeugdach (10) dienen.

7. Aufbau nach einem der vorstehenden Ansprüche, dadurch gekennzeichnet, daß die horizontal oder im wesentlichen horizontal angeordneten Flansche (24) der Fahrzeugseitenwände (21, 22, 23) jeweils durch die aneinandergefügten oberen, nach innen gerichteten Ränder von äußerem (22) und innerem Seitenwandblech (23) gebildet werden.

8. Aufbau nach Anspruch 7, dadurch gekennzeichnet, daß das innere Seitenwandblech (23) im Bereich der Punktverschweißung (25) mit Schiebedachrahmen (12) bzw. Verstärkungsschienen (26, 29) und mit dem Dachflansch (20) ausgespart (bei 35) ausgebildet ist (Fig. 7).

9. Aufbau nach einem der vorstehenden Ansprüche, dadurch gekennzeichnet, daß zur Zentrierung der durch Punktschweißung (25) miteinander zu verbindenden Flächen von Dach (10), Verstärkungsschienen (26, 29) und Fahrzeugseitenwänden (21, 22, 23) das Dach oder die innere und die äußere Seitenwand (22, 23) an den Verbindungsstellen verprägt sind (bei 33, 34) (Fig. 7).

10. Verfahren zur Herstellung eines Aufbaus nach einem der vorstehenden Ansprüche, wobei das separate Dach (10) mit Schiebedachrahmen (12) und Verstärkungsschienen (26, 29) durch Punktschweißen zu einer Baueinheit verbunden wird, die anschließend von oben in die entsprechende Karosserieöffnung eingefahren und mit den Fahrzeugseitenwänden (22, 23) verschweißt wird, dadurch gekennzeichnet, daß die Baueinheit (10, 12, 26, 29) auf horizontal oder im wesentlichen horizontal angeordnete Flansche (24) der Fahrzeugseitenwände (21, 22, 23) aufgesetzt und an seitlichen Dachflanschen (20) mit den Flanschen (24) der Fahrzeugseitenwände punktverschweißt wird.

**Claims**

1. Body for motor vehicles, in particular passenger cars, with a sliding roof which is carried by a sliding roof frame (12) reinforced by reinforcing rails (26, 29), wherein the sliding roof frame (12) together with the reinforcing rails (26, 29) is spot welded to the vehicle roof, so that it (12) forms with the vehicle roof a structural unit which is welded at its side edges to the respectively associated vehicle side panel, characterised in that the sliding roof frame (12) is spot welded to a side roof flange (20) on each side by means of a frame upper portion (13), and the upper longitudinal members (21) of the vehicle side panels in each case form an inturned, horizontally or essentially horizontally arranged flange (24), and the side roof flanges (20) together with the spot-welded frame upper portion (13) are joined to the associated flanges (24) of the vehicle side panels by spot welding.

2. Body according to claim 1 with a front reinforcing rail (26) for the sliding roof frame (12), characterised in that the front reinforcing rail (26) is connected in one piece with the frame upper portion (13), and forms a flange (27) which is turned downwards in a channel shape and to which a frame lower portion (17) is attached, preferably by screws (16) (Fig. 4).

3. Body according to claim 1 or 2, characterised in that a rear reinforcing rail (29) is provided which is also engaged by the frame lower portion (17), preferably by means of screws (16), and the rear reinforcing rail (29) like the frame upper portion (13) is joined by spot welding to the side roof flanges (20) of the vehicle roof (10) (Fig. 5).

4. Body according to claim 1 or 2, characterised in that at the rear end of the sliding roof frame (12) there is provided on each side as the frame upper portion a support which is engaged by the frame lower portion (17), preferably by means of screws (16), and the supports are joined by spot welding to the side roof flanges (20) of the vehicle roof (10) (Fig. 5).

5. Body according to any of the preceding claims, characterised in that the side roof flanges (20), which serve for spot welding to the frame upper portion (13) or to the rear reinforcing rail (29) or to the supports, also form the joint surfaces which cooperate with the horizontal or essentially horizontal flanges (24) of the vehicle side panels (21, 22, 23).

6. Body according to any of the preceding claims, characterised in that the side roof flanges (20) are angled downwards in a channel shape and also serve as drip mouldings for the vehicle roof (10).

7. Body according to any of the preceding claims, characterised in that the horizontally or essentially horizontally arranged flanges (24) of the vehicle side panels (21, 22, 23) are in each case formed by the joined-together, upper, inturned edges of outer (22) and inner (23) side panels.

8. Body according to claim 7, characterised in that the inner side panel (23) is recessed (at 35) in the region of spot welding (25) to sliding roof frame (12) or reinforcing rails (26, 29) and to the roof flange (20) (Fig. 7).

9. Body according to any of the preceding claims, characterised in that to centre the surfaces of roof (10), reinforcing rails (26, 29) and vehicle side panels (21, 22, 23) to be joined together by spot welding (25), the roof or the inner and outer side panels (22, 23) are indented at the connecting points (at 33, 34) (Fig. 7).

10. Method for the manufacture of a body according to any of the preceding claims, wherein the separate roof (10) is joined to the sliding roof frame (12) and reinforcing rails (26, 29) by spot welding to form a structural unit which is then moved from above into the corresponding body opening and welded to the vehicle side panels (22, 23), characterised in that the structural unit (10, 12, 26, 29) is placed on horizontally or essentially horizontally arranged flanges (24) of the vehicle side panels (21, 22, 23) and spot welded at side roof flanges (20) to the flanges (24) of the vehicle side panels.

**Revendications**

1. Montage pour véhicule automobile, notamment pour voiture particulière, avec un toit ouvrant, qui est porté par un cadre de toit (12) renforcé par des glissières de renforcement (26, 29), le cadre de toit ouvrant (12) étant pointé sur le toit de véhicule avec les glissières de renforcement (26, 29), de sorte qu'il (12) forme une unité constructive avec le toit de véhicule, qui est soudé sur ses bords latéraux à la paroi latérale de véhicule adjacente, caractérisé en ce que le cadre de toit ouvrant (12) est chaque fois soudé des deux côtés par points à un rebord de toit (20) latéral, au moyen d'une partie supérieure de cadre (13), et que les longerons (21) supérieurs des parois latérales de véhicule forment chaque fois un rebord (24) orienté vers l'intérieur, disposé horizontalement ou principalement horizontalement, et que les rebords de toit (20) latéraux et la partie supérieure de cadre (13) pointée sont reliés par soudure par points aux rebords (24) adjacents des parois latérales de véhicule.

2. Montage selon la revendication 1, avec une glissière de renforcement (26) avant pour le cadre de toit ouvrant (12), caractérisé en ce que la glissière de renforcement (26) avant est relié en une seule pièce à la partie supérieure de cadre (13), et forme un rebord (27) coudé vers le bas en forme de gouttière, auquel est fixé une partie inférieure de cadre (17), de préférence par des vis (16) (Fig. 4).

3. Montage selon la revendication 1 ou 2, caractérisé en ce qu'il est prévu une glissière de renforcement (29) arrière, sur laquelle est également en prise la partie inférieure de cadre (17), de préférence au moyen de vis (16), et que la glissière de renforcement (29) arrière est reliée par soudure par points aux rebords de toit (20) latéraux du toit de véhicule (10) (Fig. 5).

4. Montage selon la revendication 1 ou 2, caractérisé en ce qu'un support d'appui est prévu sur les deux côtés à l'extrémité arrière du cadre de toit ouvrant (12) sous forme de partie supérieure de cadre, sur lequel est en prise la partie inférieure de cadre (17), de préférence au moyen de vis (16), et que les tubes d'appui sont reliés par soudure par points aux rebords de toit (20) latéraux du toit de véhicule (Fig. 5).

5. Montage selon l'une des revendications précédentes, caractérisé en ce que les rebords de toit (20) latéraux servant à la liaison par soudure par points avec la partie supérieure de cadre (13), respectivement avec la glissière de renforcement (29) arrière, respectivement avec les supports d'appui, forment en même temps les surfaces de liaison collaborant avec les rebords (24) horizontaux, ou principalement horizontaux des parois latérales de véhicule (21, 22, 23).

6. Montage selon l'une des revendications précédentes, caractérisé en ce que les rebords de toit (20) latéraux sont réalisés en forme de gouttière et courbés vers le bas et servent en même temps de gouttière à pluie pour le toit de véhicule (10).

7. Montage selon l'une des revendications précédentes, caractérisé en ce que les rebords (24) des parois latérales de véhicule (21, 22, 23) disposés horizontalement ou bien principalement horizontalement sont chaque fois formées par les bords supérieurs rejoints, orientés vers l'intérieur, de la tôle de paroi latérale de véhicule extérieure (22) et intérieure (23).

8. Montage selon la revendication 7, caractérisé en ce qu'au voisinage de la soudure par points (25) au cadre de toit ouvrant (12), respectivement des glissières de renforcement (26, 29) et du rebord de toit (20), la tôle de paroi latérale (23) intérieure est échancrée (en 35) (Fig. 7).

9. Montage selon l'une des revendications précédentes, caractérisé en ce que pour le centrage des surfaces du toit (10), des glissières de renforcement (26, 29) et des parois latérales de véhicule (21, 22, 23) à relier ensemble par soudure par points (25), le toit ou la paroi latérale intérieure ou extérieure (22, 23) sont cambrés aux points de liaison (en 33, 34) (Fig. 7).

10. Procédé de fabrication d'un montage selon l'une des revendications précédentes, dans lequel le toit séparé (10) avec le cadre de toit ouvrant (12) et les glissières de renforcement (26, 29) sont reliées par soudure par points en formant une seule unité constructive, qui est directement introduite depuis le haut dans l'ouverture de carrosserie correspondante et soudée aux parois latérales de véhicule (22, 23), caractérisé en ce que l'unité constructive (10, 12, 26, 29) est placée sur les rebords (24) horizontaux ou principalement horizontaux des parois latérales de véhicule (21, 22, 23) et soudée par points aux rebords de toit (20) latéraux, avec les rebords (24) des parois latérales de véhicule.

Fig. 2

Fig. 1

EP 0 096 846 B1

Fig. 3

Fig. 4

EP 0 096 846 B1

EP 0 096 846 B1

Fig. 5

29  10  20  21  30  16  28  25  24  22  23  17

Fig. 6

31  10  32  VII  20  21  22  29a  28a  25  24  VII  23  17a

Fig. 7

10  25  28a  25  34  33  22  35  23